# EUROPEAN PATENT SPECIFICATION

(11) **EP 3 225 340 B1**
(45) Date of publication and mention of the grant of the patent: **13.02.2019**
(21) Application number: 17163141.9
(22) Date of filing: 27.03.2017
(51) Int. Cl.: B23D 45/02, B23D 45/12, B23C 3/12, B23C 5/08, B23D 47/04, B23Q 39/04

(54) **MACHINE FOR CUTTING AND BEVELLING BARS AND CUTTING AND FINISHING METHODS**
MASCHINE ZUM SCHNEIDEN UND ABSCHRÄGEN VON STÄBEN SOWIE SCHNITT- UND FINISHVERFAHREN
MACHINE POUR COUPER ET CHANFREINER DES BARRES ET MÉTHODES DE COUPE ET DE FINITION

(30) Priority: 31.03.2016 IT UA20162149
(43) Date of publication of application: 04.10.2017
(73) Proprietor: Landgraf S.r.l., 20017 Mazzo di Rho Milano (IT)
(72) Inventor: SANTAMBROGIO, Massimo, 20017 MAZZO DI RHO (IT)
(74) Representative: Faggioni, Carlo Maria

(56) References cited:
- EP-A2- 1 190 799
- DE-A1- 3 222 540
- DE-A1-102008 031 308
- US-A1- 2005 081 351
- US-A1- 2007 102 488

## Description

### Field of Invention

The present invention relates to the field of the treatment of bars or metal tubes, in particular bars or tubes having a round section. More precisely, the treatment that is taken into consideration is the cutting to size and the bevelling of the cutting edges of the bars/tubes coming out of the lamination, or peeling or drawing processes performed in a steel plant, and more particularly to a cutting machine according to the preamble of claim 1, and a cutting and finishing method according to the preamble of claim 8.

### Background Art

Such a cutting machine is known from EP1190799A2 and such a cutting and finishing method is known from DE3222540A1. As it is known, the bars coming out of a drawing plate or a rolling mill - having diameters between 20 mm to 200 mm - have an indefinite length: they must thus be cut into rough pieces of bars and then undergo a finishing treatment, before being placed on the market. Such a finishing treatment - in addition to comprising various operations such as peeling, straightening, grinding, and more - first provides a cutting to size (depending on the customer or application requirements) and subsequently a bevelling of the cut edge, essentially in order to remove the sharp edge left by the cutting operation.

Further on, bars will be generically mentioned, but it is understood that this term also means tubes or pieces shorter than traditional bars whose lengths are in the range of a few metres.

Traditionally, the cutting operation is performed by blocking the bar between two jaws and by operating a cutoff saw by means of which a circular cutting blade crosses the section of the bar between the two jaws. The cut allows to divide the bar into shorter bar portions, having different lengths; the length of these portions is determined according to the future use of the bars and is normally based on the buyer's request. Such bar portions are typically provisionally stacked, before being transferred to a bevelling station, where the bevelling operation - i.e. the chamfering of the edges of the section - is carried out on the two ends of the cut bar by means of an appropriate separate machine.

A bevelling machine of the prior art normally provides one or more rotating heads on which a number of cutting inserts are assembled: the bar is axially moved closer to the axis of rotation of the bevelling/faceting head and, thanks to the rotation of the latter, continuous bevelling is performed on the circular edge of the bar. What is clear is that these procedures are expensive both in terms of processing times and of the problems due to the handling of the bar portions from the cutting machine to the bevelling machine, as well as for the need to have appropriate temporary stacking spaces between the two procedures.

According to the prior art, proposals have already been made concerning machines in which the cutting of a bar is performed while the bar is rotating. For example DE102008031308.

EP1190799 discloses a machine on which the cutting and partial bevelling occur simultaneously by means of a suitably shaped grinding wheel; the bar, which is blocked between two movable mandrels, is loaded laterally. This solution involves the use of a suitably shaped grinding wheel, which is expensive, cannot be used for standard cuts and does not offer a flexibility of use on bars of different diameters or with different chamfers.

DE3222540 discloses a machine on which it is devised to carry out the cutting by keeping the bar in rotation, holding it between a mandrel and an opposite tip (as in lathes); further, it is provided with a traditional turning tool that is able to perform chamfering; both the turning tool and the cutting blade move along straight guides with opposed linear movements substantially along the same axis. This machine is able to cut and bevel in the same unit; however, its configuration is not optimized for the industrial bar cutting and bevelling treatment. In particular, a stationary turning tool is effective when the rotation of the bar occurs at a high number of rotations (such as in a lathe), but it is not effective if the number of rotations is low.

### Summary of the Invention

The problem which is addressed by the invention is to supply a machine which overcomes the above-mentioned drawbacks and thus allows a drastic reduction of processing times and a limitation of the construction and maintenance costs.

This object is achieved through a cutting machine according to claim 1, a cutting and finishing method according to claim 8 and a method of using such a machine according to claim 9.

Preferred embodiments are defined by the features of dependent claims 2-7.

### Brief Description of the Drawings

Further features and advantages of the invention will anyhow be more evident from the following detailed description of a preferred embodiment, given by mere way of non-limiting example and illustrated in the accompanying drawings, wherein:

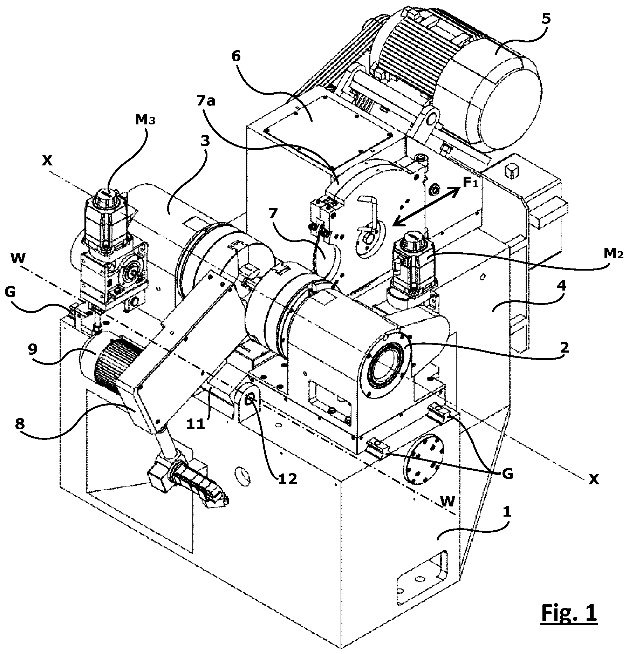

Fig. 1 is a perspective overall view of a cutting and bevelling machine according to the invention;
Fig. 2 is a schematic plan view of the machine shown in Fig. 1;
Fig. 3 is an exploded view of only the essential elements of the same machine, which perform the cutting and bevelling operations, at the beginning of the processing step;
Fig. 4 is a view similar to that of Fig. 3, during a step when the cutting and bevelling processing has just ended; and
Fig. 5 is a schematic drawing showing how the cutting and bevelling sequence of the bar is performed according to the present invention.

### Detailed Description of a Preferred Embodiment

As shown in the drawings, a machine tool, according to one exemplary embodiment comprises a base frame 1, on which two holding devices intended for the bar to be machined are mounted, which are arranged opposite to each other, and define an axis X-X along which the bar is moved.

These two holding devices are in the form of rotatable mandrels 2 and 3, coaxially arranged so as to firmly tighten the bar passing through them and have it rotate according to the common axis of rotation X-X. They are both motorized, kept under the same electric axis by means of a control method known per se, in order to determine the drive in rotation the bar to be machined: to this end, each of the two mandrels has its own motorisation M₂ and M₃, which provides for the respective controlled and synchronized rotation.

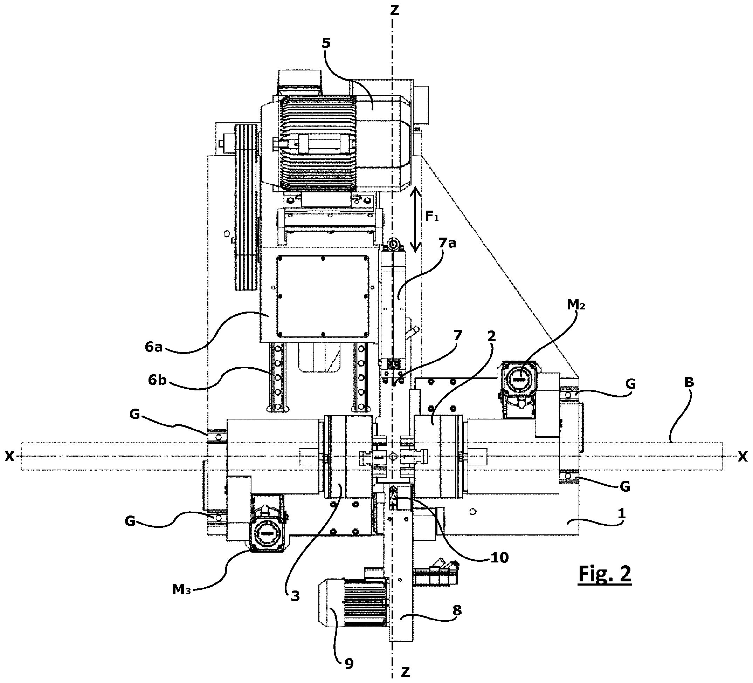

Each mandrel has a mandrel head with a through cavity, provided with a plurality of radial jaws that can be radially tightened on a bar, which is arranged along the longitudinal axis X-X. In such a way, a bar B (see the dotted line in Fig. 2) can be changed by the two mandrel heads 2 and 3 and firmly held fixed along the longitudinal direction, while it is rotated by means of the motors M₂ and M₃ of the respective mandrels.

Since the two motors M₂ and H₃ are laterally positioned with respect to the mandrel axes, this configuration has advantageously no obstacles on the rotation axis: the loading of the bars can take place axially, which is advantageous for the productivity of the machining. In other words, a long raw bar is longitudinally inserted through a mandrel and then also blocked in the other mandrel: the cutting operation moves forward along the different bar portions having the desired length (which will be explained further on), and at the same time the bar can be pushed forward - by means of a sequenced clamping and release procedure by the mandrels - and thus the desired sequence of cuts is achieved.

To this end, the two mandrel heads 2 and 3 are preferably arranged specularly opposing each other. This configuration allows to securely clamp the bar B in proximity of a processing area, where, therefore, the bar doesn't undergo high torsion or bent forces, even if it is subjected to the working stress applied by the tool. The mutual distance between the mandrel heads leaves enough room to reach the working area and to be able to work within it by using special tools, as it is shown below.

In addition, each motorized mandrel 2 and 3 is preferably mounted on the base 1 by means of adjusting means, for example suitable sliding guides G, which allow the mutual distance between the two mandrel heads to be adjusted, as well as, preferably, any misalignment tolerances are adjusted (in this case, being self-centering clamping heads).

On the lateral side of the base frame 1, i.e. on one of the two opposite sides with respect to the movement axis X-X, an additional frame 4 is provided, on which a movable cutting assembly is mounted, for instance a sawing machine. In the illustrated embodiment, the cutting assembly comprises a motor 5 which drives in rotation, by means of a reducer unit 6, a cutting tool 7, for instance in the form of a circular blade, intended to perform the cutting function of the metal bar B, according to the method that is better described hereinafter. The cutting tool 7 is preferably housed into a carter 7A, which protects and, if necessary, lubricates the cutting tool.

The cutting unit is mounted on the frame 4 and it linearly slides back and forth in the direction of the double arrow F1, so that the cutting tool 7 can be moved closer and away perpendicularly to the axis X-X of the bar B. For example, the cutting unit is mounted on a movable slide 6A along a pair of rails 6B.

According to the invention, on the base frame 1, on the opposite side to that of the cutting unit, a bevelling unit 8 is also mounted, which can operate off-axis, with respect to the longitudinal axis X-X of the bar B. The bevelling unit, in particular, has a box-like body on which a transmission motor 9 is mounted, preferably a belt transmission, which controls a bevelling tool 10, arranged at the end of the unit facing the machining area between the two mandrels 2 and 3.

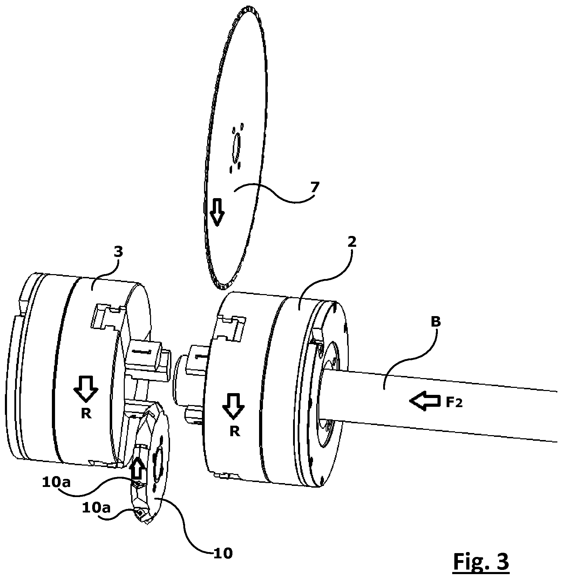

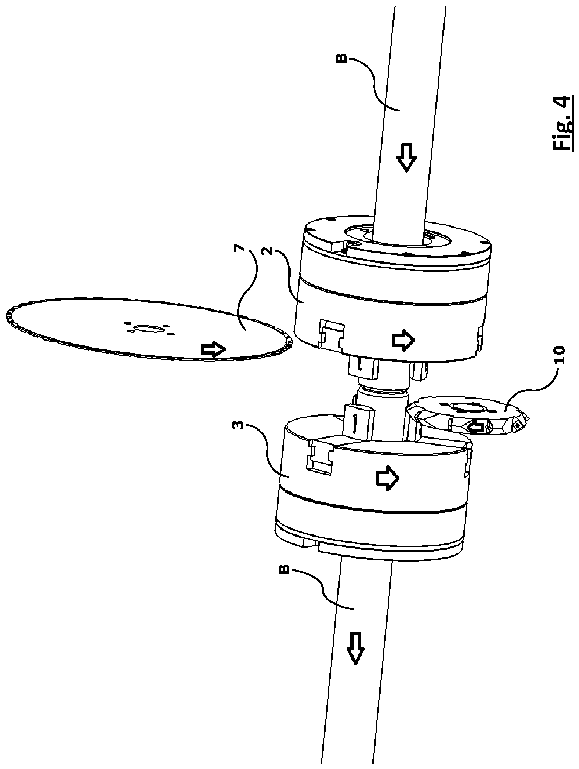

The bevelling tool 10 is constituted by a tool holder, in the form of a rotating disc (which is better described hereinafter with reference to Figures 3 and 4), having a rotation axis parallel to the axis X-X, on which one or more cutting inserts 10a are mounted. Preferably, as schematically shown in Figs. 3 and 4, what is provided is a disc 10 having a plurality of equally spaced radial seats, adapted to define shoulders on which the cutting edges 10a are fixed - in the form of small plates of hard metal - whose cutting edge protrudes from the perimeter profile of the disc 10.

Even the bevelling unit 8, with its bevelling tool 10, is movably mounted in such a way as to be able to move closer/further away perpendicularly to the axis X-X of the mandrels 2, 3. According to the invention, the unit 8 is supported by an arm 11, which is in turn mounted on an articulated hinge block 12, possibly adjustable, which enables the rotation of the unit 8 around an axis W-W, which is in turn parallel to the axis X-X. In such a way, the tool disc 10 can perform a movement which follows the arc of a circle, centred on the axis W-W, which intercepts the working area where there is located the bar B.

This is an advantageous configuration in terms of space occupation, minimum level of maintenance and greater control of the bevelling operation.

As it can also be seen in the drawings, and in particular in Fig. 2, the cutting tool 7 and the bevelling tool 10 are mounted on the machine so as to be aligned on a same vertical plane Z-Z, perpendicular to the longitudinal axis X-X of the bar B to be machined and passing between the two mandrel heads 2 and 3. They are also positioned on either sides of said axis X-X, to operate from two opposite sides.

The pivoting movement of the bevelling unit causes the entry point of the bevelling unit on the bar not to be diametrically opposed to the entry point of the cutting blade: this allows a greater flexibility of choice within the overall operation, depending also on the direction of rotation of the bar (thus anticipating or delaying the start of the bevelling procedure on the cut).

The operating principle of the machine, according to the invention, is illustrated below.

A metal bar B is moved forward along the axis X-X, in the direction of the arrow F₂, one of its ends Bl passing through the first mandrel 2 (as schematically shown in Figure 3), and then also through the second mandrel 3. After reaching the desired position, which corresponds to the bar length to be prepared, the two mandrels 2, 3 are clamped to the bar and brought in rotation around the axis X-X (the rotation is indicated by the arrows R). At the same time, the two cutting tools 7 and the bevelling tools 10 start rotating as well: preferably, the two disc tools are brought in rotation in the opposite direction, as represented by the respective arrows in the figures, because this ensures a better balancing of the forces, hence a reduced risk of vibration.

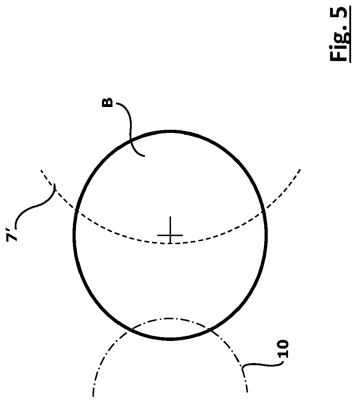

At first the cutting tool 7 is moved towards the rotation axis X-X of the bar, until it reaches a working position intercepting the section of the bar (see the dotted line 7 'in Fig. 5). After that, the bevelling tool 10 is also moved forward by means of a displacement which follows the arc of a circle, still perpendicular to the axis X-X.

Preferably, the processing sequence provides that the first part of the travel of the blade 7 within the section of the bar B causes a sufficiently large grooved cut to allow the successive entry of the bevelling tool 10. Therefore, after completing the first phase of partial cut, the bevelling tool can intercept the section of the bar and create, on the two opposite sides of the disc 10, a chamfered bevelling surface on the two terminal ends of the bar (see Fig. 4).

The second part of the travel of the cutting blade 7 completes the cutting of the bar B in the machining area, creating a complete separation of the two pieces.

During this working cycle of the two tools, the mandrels cause the bar B to perform at least one complete rotation, so as to expose its entire circumference to the action of the bevelling tool 10. In any case, what must be taken into account is that, for this kind of machining, the apparatus of the invention causes the bars to perform 1 to 3 complete rotations in the entire operation (they increase upon the increasing of the diameter of the bar), so the rotation speed is significantly low.

Favourably, rotations of the two tools 7 and 10 in the opposite direction have the advantage of not causing a rotation bias to the bar, because - since they act from opposite positions with respect to the axis X-X - they exert opposing forces on the bar, which tend to cancel each other. Preferably, the direction of rotation R of the bar is the same as the cutting blade 7.

It should also be observed that the approaching movements of the tools 7 and 10 are precisely adjusted both as for timing and displacement. In particular, on the one hand, control means are provided that make the cutting tool 7 to only partially cut the bar section B, in particular, just a bit beyond the central axis of the bar B (see Fig. 5); on the other hand, control means are provided that provide for the desired travel of the bevelling unit, sufficient to create the desired perimeter chamfering, without turning it unintentionally in a full milling operation.

The machine processing which leads to cutting and faceting/bevelling the bar takes place according to principles known per se and, therefore, it is not necessary to give further explanations. In fact, the innovation of the invention does not lie in the individual processes, but rather in the fact that, due to the particular design of the machine, such cutting and bevelling operations can be performed in one single station, substantially at the same time and in an optimized way, so as to reduce the processing time and in view of the processing quality.

After the above described cutting and bevelling operations have been completed, the mandrels 2 and 3 are opened or loosened: at that point, the portion of the bar B, which is located downstream of said alignment plane Z-Z, is pulled out from the mandrel 3 and transferred to the warehouse as a finished product. At the same time, the portion of the bar B which is located upstream is moved forward through the mandrels 2 and 3, according to the desired length of a new portion of the bar.

As it can be understood, each cutting and bevelling operation determines both the separation of two bar portions and the finishing of the two abutting ends of two successive portions; it is clear that the bar portion which is located upstream of the cutting will have its downstream end fully finished, whereas the upstream end can be finished during a subsequent cutting operation.

From the above description, it is possible to understand the great advantages achieved by the machine according to the invention, which can be summarized as follows:
- no more downtime, as it was the case with the prior art, upon transferring the bars from the cutting machine to the bevelling unit;
- no more downtime, as it was the case with the prior art, to precisely register the position of one bar end with respect to the bevelling tool;
- further reduction of processing times, thanks to the fact that bevelling is performed at the same time on the two bar ends, and precisely on the upstream end of an incoming bar and on the downstream end of a bar portion that has been already cut and butted; moreover, it should be noted that the cutting blade need not be moved forward by passing through the entire section of the bar/tube, but it is enough for it to slightly exceed the axis of rotation to complete the cut;
- efficiency of the bevelling operation, even at the low revolution speed, which is typical in this kind of industrial operations;
- possibility of axially loading the bar, in a continuous way, by easily and rapidly changing the length of the finished bar portions;
- reduced footprint of the equipment and flexibility of the operating time of the bevelling unit, which performs an arched movement.

It is understood, however, that the invention is not to be considered as limited by the particular arrangements illustrated and described, which represent only exemplary implementations of the same, but different variants are possible, all within the reach of a person skilled in the art, without departing from the scope of the invention itself, as defined by the appended claims.

For example, although the machine has always been described as having two opposite mandrels, it is possible to use the same principle to cut and finish rather short pieces, which thus may be cantilevered held by a single mandrel head and, at the end of the cut, be released into a collection container. In this case, the machine may be provided with a single mandrel head.

Furthermore, in spite of the fact that the bevelling unit has been described in a position opposite to the cutting tool, with respect to the axis of rotation X-X, it is possible that the two relative locations may also be different, although they must necessarily be on the same work plane Z-Z.

## Claims

1. Cutting machine for cutting bars comprising a base frame (1) on which a lying axis (X-X) of a bar is defined, and a cutting unit (5, 6, 7) provided with a cutting tool (7) apt to be perpendicularly moved closer to/further apart from said lying axis (X-X) along a work plane (Z-Z),
wherein said base frame (1) is provided with at least one through-mandrel (2, 3), which is coaxial on said lying axis (X-X), provided with a clamping head in the proximity of a processing area which is crossed by said work plane (Z-Z),
and said through-mandrel (2, 3) is rotatable with a rotation about said lying axis (X-X),
**characterised in that**
a bevelling unit (8) is furthermore provided with a rotating bevelling tool (10) mounted movable closer to/further away perpendicularly to said lying axis (X-X) along said work plane (Z-Z) by a movement along an arc of circle.

2. Machine as in 1, wherein said cutting tool (7) consists of a rotating-disc blade.

3. Machine as in 1 or 2, wherein said cutting unit (5, 6, 7) is mounted on a movable carriage (6A), translatable backwards and forwards in a direction perpendicular to said lying axis (X-X).

4. Machine as in any one of the preceding claims, wherein said bevelling tool (10) consists of a circular tool-carrier on which a plurality of cutting members (10a) is set, according to a circumferential path, said circular tool-carrier being driven into rotation by a relative motorisation (9).

5. Machine as in 2 or 4, wherein said cutting tool (7) and said bevelling tool (10) are driven into rotation in opposite directions.

6. Machine as in any one of the preceding claims, wherein said bevelling unit (8) is mounted pivoting around a hinge axis (W-W) parallel to said lying axis (X-X).

7. Machine as in any one of the preceding claims, wherein two through-mandrels (2, 3) are provided, which are coaxial on said lying axis (X-X), provided with mirror-like opposite clamping heads and axial loading means of said bars are also provided.

8. Cutting and finishing method of a bar wherein a bar is fastened onto a mandrel and subsequently cut through by a cutting unit (5, 6 ,7) movable transversally to the bar along a work plane (Z-Z),
wherein said mandrel is driven into rotation about a lying axis (X-X) during a cutting step, and arranging a bevelling unit (8, 9) **characterized by**
said bevelling unit having a rotating tool (10) along said work plane (Z-Z), and after having performed at least a first grooved cut on said bar by means of the cutting assembly, causing also said bevelling unit (10) to progress towards said lying axis (X-X) by performing an arched movement, until its cutting inserts (10a) are brought to engage said bar in correspondence of said work plane (Z-Z).

9. Cutting and finishing method of a bar using a machine as in any one of the preceding claims 1-7, wherein there are provided the steps of
axially loading and inserting said bar longitudinally within an opposite pair of rotating through-mandrels (2, 3) as far as desired and clamping the bar in position on a lying axis (X-X),
arranging a cutting unit (5, 6, 7) and a bevelling unit (8, 9, 10) in substantially opposite locations with respect to said lying axis (X-X),
driving into slow rotation said bar clamped by said pair of mandrels (2, 3) about said lying axis (X-X),
causing a rotating cutting tool (7) of the cutting unit to progress towards a work position engaging the section of said bar along a work plane (Z-Z),
after having performed at least a first grooved cut on said bar, causing also said bevelling unit (8, 9, 10) to progress towards said lying axis (X-X) by performing an arched movement, until cutting inserts (10a) of a rotating tool (10) of said bevelling unit (8, 9) are brought to engage said bar in correspondence of said work plane (Z-Z).

## Patentansprüche

1. Schneidemaschine zum Schneiden von Stangen, umfassend einen Grundrahmen (1), auf dem eine Liegeachse (X-X) einer Stange definiert ist, und eine Schneideinheit (5, 6, 7), die mit einem Schneidwerkzeug (7) versehen ist, das ausgelegt ist um entlang einer Arbeitsebene (Z-Z) senkrecht näher an die/weiter entfernt von der Liegeachse (X-X) bewegt zu werden, umfassend;
wobei der Grundrahmen (1) mit mindestens einem Durchgangsdorn (2, 3) versehen ist, der koaxial auf der Liegeachse (X-X) angeordnet ist und der mit einem Klemmkopf in der Nähe eines Bearbeitungsbereichs versehen ist, der von der Arbeitsebene (Z-Z) durchquert wird,
und wobei der Durchgangsdorn (2, 3) mit einer Drehung um die Liegeachse (X-X) drehbar ist, **dadurch gekennzeichnet, dass**
eine Faseneinheit (8) ferner mit einem rotierenden Fasenwerkzeug (10) versehen ist, das entlang der Arbeitsebene (Z-Z) durch eine Bewegung entlang eines Kreisbogens senkrecht näher an die/weiter weg von der Liegeachse (X-X) beweglich ist.

2. Maschine nach Anspruch 1, wobei das Schneidwerkzeug (7) aus einer rotierenden Scheibenklinge besteht.

3. Maschine nach Anspruch 1 oder 2, wobei die Schneideinheit (5, 6, 7) auf einem beweglichen Förderwagen (6A) montiert ist, der rückwärts und vorwärts in einer Richtung senkrecht zur Liegeachse (X-X) verschiebbar ist.

4. Maschine nach einem der vorstehenden Ansprüche,
wobei das Fasenwerkzeug (10) aus einem kreisförmigen Werkzeugträger besteht, auf dem eine Vielzahl von Schneidelementen (10a) gemäß einer Umfangsbahn angeordnet sind, wobei der kreisförmige Werkzeugträger durch eine relative Motorisierung (9) in Drehung versetzt wird.

5. Maschine nach Anspruch 2 oder 4, wobei das Schneidwerkzeug (7) und das Fasenwerkzeug (10) in entgegengesetzte Richtungen in Drehung versetzt werden.

6. Maschine nach einem der vorhergehenden Ansprüche, wobei die Faseneinheit (8) um eine Scharnierachse (W-W) parallel zu der Liegeachse (X-X) schwenkbar gelagert ist.

7. Maschine wie in einem der vorstehenden Ansprüche, wobei zwei Durchgangsdorne (2, 3) vorgesehen sind, die koaxial auf der Liegeachse (X-X) angeordnet sind und mit spiegelartig gegenüberliegenden Klemmköpfen versehen sind, und wobei außerdem axiale Belastungsmittel der Stangen vorgesehen sind.

8. Schneid- und Endbearbeitungsverfahren einer Stange, wobei eine Stange auf einem Dorn befestigt und anschließend von einer Schneideinheit (5, 6, 7) durchtrennt wird, die quer zu der Stange entlang einer Arbeitsebene (Z-Z) beweglich ist,
wobei der Dorn während eines Schneidschritts um eine Liegeachse (X-X) in Drehung versetzt wird und Anordnen einer Faseneinheit (8, 9),
**dadurch gekennzeichnet, dass** die Faseneinheit ein rotierendes Werkzeug (10) entlang der Arbeitsebene (Z-Z) aufweist und wobei,
nachdem mindestens ein erster Nutschnitt an der Stange mittels der Schneidanordnung durchgeführt wurde, auch die Faseneinheit (10) durch Ausführen einer Bogenbewegung zum Bewegen in Richtung der Liegeachse (X-X) veranlasst wird, bis ihre Schneideinsätze (10a) in die Stange entsprechend der Arbeitsebene (Z-Z) eingebracht wurden.

9. Schneid- und Endbearbeitungsverfahren einer Stange unter Verwendung einer Maschine nach einem der vorhergehenden Ansprüche 1-7, wobei die folgenden Schritte vorgesehen sind
axiales Laden und Einführen der Stange in Längsrichtung innerhalb eines gegenüberliegenden Paares von rotierenden Durchgangsdornen (2, 3), soweit wie gewünscht, und Klemmen der Stange in Position auf einer Liegeachse (X-X), Anordnen einer Schneideinheit (5, 6, 7) und einer Faseneinheit (8, 9, 10) an im Wesentlichen gegenüberliegenden Stellen in Bezug auf die Liegeachse (X-X), Antreiben der Stange in eine langsame Drehung, die durch das Paar von Dornen (2, 3) um die Liegeachse (X-X) eingespannt ist,
Veranlassen, einer Bewegung eines rotierenden Schneidwerkzeugs (7) der Schneideinheit in Richtung einer Arbeitsposition, die in den Abschnitt der Stange entlang einer Arbeitsebene (Z-Z) eingreift,
weiterhin Veranlassen einer Bewegung der Faseneinheit (8, 9, 10) durch Ausführen einer Bogenbewegung in Richtung der Liegeachse (X-X), bis Schneideinsätze (10a) eines rotierenden Werkzeugs (10) der Faseneinheit (8, 9) in die Stange eingebracht werden, um entsprechend der Arbeitsebene (Z-Z) in diese einzugreifen, nachdem mindestens ein erster Nutschnitt an der Stange durchgeführt wurde.

## Revendications

1. Machine de coupe destinée à couper des barres comprenant un cadre de base (1) sur lequel un axe horizontal (X-X) d'une barre est défini, et une unité de coupe (5, 6, 7) pourvue d'un outil de coupe (7) apte à être perpendiculairement rapproché/écarté dudit axe horizontal (X-X) le long d'un plan de travail (Z-Z),
dans laquelle ledit cadre de base (1) est pourvu d'au moins un mandrin traversant (2, 3) coaxial sur ledit axe horizontal (X-X) et pourvu d'une tête de serrage à proximité d'une zone de traitement qui est traversée par ledit plan de travail (Z-Z),
et ledit mandrin traversant (2, 3) peut tourner par une rotation autour dudit axe horizontal (X-X),
**caractérisée en ce que**
une unité de chanfreinage (8) est en outre pourvue d'un outil de chanfreinage rotatif (10) monté pour se rapprocher/s'écarter dudit axe horizontal (X-X) perpendiculairement le long dudit plan de travail (Z-Z) par un mouvement le long d'un arc de cercle.

2. Machine telle que revendiquée dans la revendication 1, dans laquelle ledit outil de coupe (7) est constitué d'une lame à disque tournant.

3. Machine telle que revendiquée dans la revendication 1 ou 2, dans laquelle ladite unité de coupe (5, 6, 7) est montée sur un chariot mobile (6A) pouvant être translaté vers l'arrière et vers l'avant dans une direction perpendiculaire audit axe horizontal (X-X).

4. Machine telle que revendiquée dans l'une quelconque des revendications précédentes, dans laquelle ledit outil de chanfreinage (10) consiste en un porte-outil circulaire sur lequel une pluralité d'organes de coupe (10a) est établie, selon un chemin circonférentiel, ledit porte-outil circulaire étant entraîné en rotation par une motorisation relative (9).

5. Machine telle que revendiquée dans la revendication 2 ou 4, dans laquelle ledit outil de coupe (7) et ledit outil de chanfreinage (10) sont entraînés en rotation dans des directions opposées.

6. Machine telle que revendiquée dans l'une quelconque des revendications précédentes, dans laquelle ladite unité de chanfreinage (8) est montée pivotante autour d'un axe d'articulation (W-W) parallèle audit axe horizontal (X-X).

7. Machine telle que revendiquée dans l'une quelconque des revendications précédentes, dans laquelle sont pourvus deux mandrins traversants (2, 3) coaxiaux sur ledit axe horizontal (X-X) et pourvus de têtes de serrage opposées de type miroir et des moyens de chargement axial desdites barres sont également pourvus.

8. Procédé de coupe et de finition d'une barre dans lequel une barre est fixée sur un mandrin et ensuite découpée par une unité de coupe (5, 6, 7) mobile transversalement à la barre le long d'un plan de travail (Z-Z),
dans lequel ledit mandrin est entraîné en rotation autour d'un axe horizontal (X-X) au cours d'une étape de coupe, et une unité de chanfreinage (8, 9) est agencée,
**caractérisé par le fait que** ladite unité de chanfreinage dispose d'un outil rotatif (10) le long dudit plan de travail (Z-Z) et, après avoir effectué au moins une première coupe rainurée sur ladite barre au moyen de l'ensemble de coupe, amène également ladite unité de chanfreinage (10) à avancer vers ledit axe horizontal (X-X) en effectuant un mouvement arqué, jusqu'à ce que ses inserts de coupe (10a) soient amenés à venir en prise avec ladite barre en correspondance avec ledit plan de travail (Z-Z).

9. Procédé de coupe et de finition d'une barre utilisant une machine telle que revendiquée dans l'une quelconque des revendications précédentes 1 à 7, dans lequel sont pourvues les étapes consistant à
axialement charger et insérer ladite barre longitudinalement dans une paire opposée de mandrins traversants rotatifs (2, 3) aussi loin que souhaité et serrer la barre en position sur un axe horizontal (X-X),
agencer une unité de coupe (5, 6, 7) et une unité de chanfreinage (8, 9, 10) dans des emplacements substantiellement opposés par rapport audit axe horizontal (X-X),
entrainer en rotation lente ladite barre serrée par ladite paire de mandrins (2, 3) autour dudit axe horizontal (X-X),
amener un outil de coupe rotatif (7) de l'unité de coupe à avancer vers une position de travail venant en prise avec la section de ladite barre le long d'un plan de travail (Z-Z),
après avoir effectué au moins une première coupe rainurée sur ladite barre, également amener ladite unité de chanfreinage (8, 9, 10) à avancer vers ledit axe horizontal (X-X) en effectuant un mouvement arqué, jusqu'à ce que des inserts de coupe (10a) d'un outil rotatif (10) de ladite unité de chanfreinage (8, 9) soient amenés à venir en prise avec ladite barre en correspondance avec ledit plan de travail (Z-Z).
